# EUROPÄISCHE PATENTSCHRIFT

(11) **EP 4 419 830 B1**
(45) Veröffentlichungstag und Bekanntmachung des Hinweises auf die Patenterteilung: **07.05.2025**
(21) Anmeldenummer: 22797675.0
(22) Anmeldetag: 26.09.2022
(51) Int. Cl.: F17C 13/04, F16K 1/30

(54) **BRENNSTOFFZELLENSYSTEM, GASTANKVORRICHTUNG UND ABSPERREINRICHTUNG FÜR EINE GASTANKVORRICHTUNG**
FUEL CELL SYSTEM, GAS TANK DEVICE, AND BLOCKING DEVICE FOR A GAS TANK DEVICE
SYSTÈME PILE À COMBUSTIBLE, DISPOSITIF RÉSERVOIR DE GAZ ET DISPOSITIF D'ARRÊT POUR UN DISPOSITIF RÉSERVOIR DE GAZ

(30) Priorität: 20.10.2021 DE 102021211815
(43) Veröffentlichungstag der Anmeldung: 28.08.2024
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE)
(86) Internationale Anmeldenummer: PCT/EP2022/076678
(87) Internationale Veröffentlichungsnummer: WO 2023/066609

(56) Entgegenhaltungen:
- CN-A- 113 137 570
- DE-A1- 102018 215 380
- DE-A1- 102018 221 600
- JP-A- 2016 156 485

## Beschreibung

### Technisches Gebiet

Die vorliegende Erfindung betrifft ein Brennstoffzellensystem, eine Gastankvorrichtung, insbesondere für ein Brennstoffzellensystem, und eine Absperreinrichtung für eine Gastankvorrichtung.

### Stand der Technik

Brennstoffzellensysteme umfassen üblicherweise eine Brennstoffzellenanordnung, z.B. in Form eines Stacks mit einer Vielzahl elektrisch in Reihe geschalteter Brennstoffzellen, welcher über eine Brennstoffzufuhrleitung gasförmiger Brennstoff, z.B. Wasserstoff, aus einem Tank zugeführt wird. Sowohl in stationären als auch in mobilen Anwendungen, wie z.B. in einem Fahrzeug, steht der gasförmige Brennstoff in dem Tank üblicherweise unter hohem Druck, welcher beispielsweise bis zu 700 bar oder mehr betragen kann. Der Tank bildet somit ein Hochdruckreservoir. Der Brennstoffzellenanordnung wird der Brennstoff normalerweise mit geringerem Druck zugeführt, z.B. mit einem Druck im Bereich zwischen 2 bar und 20 bar. Die Brennstoffzufuhrleitung kann beispielsweise durch eine Druckregelungsvorrichtung, in welcher der Druck des Brennstoffs reduziert wird, mit dem Tank verbunden sein. Die Leitung zwischen Tank und Druckregelungsvorrichtung ist üblicherweise als Hochdruckleitung ausgeführt und wird im Folgenden als Versorgungsleitung bezeichnet, da über diese das Brennstoffzellensystem mit Brennstoff versorgt wird. Der Tank ist üblicherweise mit einem Absperrventil versehen, um einen Brennstoffaustritt aus dem Tank abzusperren, z.B. wenn die Brennstoffzellenanordnung außer Betrieb genommen wird oder im Fall eines Defekts.

Absperrventile für Hochdruckgastanks sind in der Regel als stromlos geschlossene Magnetventile konzipiert. Typischerweise wird eine Ventilnadel durch eine Feder gegen einen Dichtsitz vorgespannt und ist durch eine mittels einer Spule erzeugbare magnetische Kraft gegen die Vorspannkraft der Feder von dem Dichtsitz abhebbar. Aufgrund des hohen Drucks im Tank können je nach Bauart des Ventils hohe Öffnungskräfte erforderlich sein. Dies erfordert leistungsstarke Spulen und erschwert die Miniaturisierung des Ventils.

Die DE 10 2006 027 712 A1 offenbart ein Absperrventil für einen Wasserstoffdrucktank mit einem Gehäuse, welches einen ersten Ventilsitz und einen zweiten Ventilsitz aufweist, und einem durch eine elektrische Spule bewegbaren Ventilschaft, welcher an seinem Außenumfang beabstandete erste und zweite Dichtelemente trägt. In einer geschlossenen Stellung des Ventils sind die Dichtelemente durch eine Feder gegen die Ventilsitze vorgespannt, um einen Einlass gegenüber einem zwischen den Ventilsitzen im Gehäuse ausgebildeten Auslass abzudichten. Der Ventilschaft weist eine erste Öffnung auf, welche eine Fluidverbindung zwischen dem Einlass und einer Hochdruckseite des ersten Dichtelements ausbildet. Dadurch wird auf das erste Dichtelement eine Schließkraft infolge des am Einlass anliegenden Drucks ausgeübt. Ferner weist der Ventilschaft eine Durchgangsbohrung auf, die eine auf einer Niederdruckseite des zweiten Dichtelements gelegene Nebenkammer mit dem Einlass verbindet. Dadurch wird eine Öffnungskraft auf das zweite Dichtelement ausgeübt, die entgegengesetzt zu der auf den ersten Dichtkörper wirkenden Schließkraft wirkt. Ziel dieses Aufbaus ist es, eine durch die Druckdifferenz auf den Ventilschaft bzw. die Dichtelemente wirkende Kraft zu senken, um die durch die elektrische Spule zu erzeugende Öffnungskraft zum Öffnen des Ventils zu verringern.

Die JP 2016 156485 A offenbart eine Ventilvorrichtung umfassend:
ein Gehäuse mit einem Primärdurchgang, einem Sekundärdurchgang und einem Ventilelementraum zwischen dem Primärdurchgang und dem Sekundärdurchgang, wobei der Primärdurchgang und der Sekundärdurchgang einen Hauptdurchgang bilden.

In der CN 113 137 570 wird ein fahrzeugmontiertes Ultra-Hochdruck- Wasserstoff-Speicherflaschen-Kombinationsventil gezeigt, das einen Ventilkörper umfasst.

Die DE 10 2018 221 600 A1 offenbart ein Verfahren zum Betreiben einer Tankvorrichtung zur Speicherung von verdichteten Fluiden mit einem Tank, einer Ventilvorrichtung, einer Zuführleitung, einem in der Zuführleitung angeordneten Durchflusselement und einer Steuereinheit.

DE 10 2018 215 380 A1 zeigt eine Ventilvorrichtung für ein gasförmiges Medium, insbesondere Wasserstoff, mit einem Ventilgehäuse und einem darin angeordneten entlang einer Längsachse bewegbaren ersten Magnetanker.

### Offenbarung der Erfindung

Erfindungsgemäß ist eine Absperreinrichtung für eine Gastankvorrichtung mit den Merkmalen des Anspruchs 1, eine Gastankvorrichtung mit den Merkmalen des Anspruchs 8 und ein Brennstoffzellensystem mit den Merkmalen des Anspruchs 10 vorgesehen.

Nach einem ersten Aspekt der Erfindung umfasst eine Absperreinrichtung für eine Gastankvorrichtung einen ersten Anschluss zur Verbindung mit einem Hochdrucktank, einen zweiten Anschluss zu Verbindung mit einer Versorgungsleitung, eine Hauptventilkammer, welche eine mit dem ersten Anschluss fluidisch leitend verbundene erste Öffnung, eine mit dem zweiten Anschluss fluidisch leitend verbundene zweite Öffnung, und eine erste Steueröffnung aufweist, ein als schaltbares Magnetventil ausgebildetes Hauptventil mit einer in der Hauptventilkammer angeordneten Hauptventilnadel, welche zwischen einer Schließstellung, in der sie an einem die zweite Öffnung umgebenden Hauptventilsitz anliegt, um die zweite Öffnung gegenüber der ersten Öffnung abzudichten, und einer Öffnungsstellung bewegbar ist, in der sie von dem Hauptventilsitz abgehoben ist. Die Hauptventilnadel teilt die Hauptventilkammer in einen Auslassraum,
in welchen die erste und die zweite Öffnung münden, und einen Steuerraum, in welchen die erste Steueröffnung mündet und welcher mit dem Auslassraum fluidisch leitend verbunden ist.

Die Absperreinrichtung umfasst ferner eine von der Hauptventilkammer räumlich getrennte Servoventilkammer, welche eine fluidisch leitend mit der ersten Steueröffnung verbundene zweite Steueröffnung und eine mit dem zweiten Anschluss fluidisch leitend verbundene Servoöffnung aufweist, und ein als schaltbares Magnetventil ausgebildetes Servoventil mit einer in der Servoventilkammer angeordneten Servoventilnadel, welche zwischen einer Schließstellung, in der sie an einem die Servoöffnung umgebenden Servoventilsitz anliegt, um die Servoöffnung gegenüber der zweiten Steueröffnung abzudichten, und einer Öffnungsstellung bewegbar ist, in der sie von dem Servoventilsitz abgehoben ist.

Nach einem zweiten Aspekt der Erfindung ist eine Gastankvorrichtung, insbesondere für ein Brennstoffzellensystem, vorgesehen. Die erfindungsgemäße Gastankvorrichtung umfasst einen Hochdruckgastank zur Aufnahme von Gas, wie z.B. Wasserstoff, und eine Absperreinrichtung nach dem ersten Aspekt der Erfindung, wobei der erste Anschluss der Absperreinrichtung mit einer Auslassöffnung des Hochdruckgastanks verbunden ist.

Nach einem dritten Aspekt der Erfindung umfasst ein Brennstoffzellensystem eine Brennstoffzellenanordnung mit zumindest einer Brennstoffzelle, einem Brennstoffeinlass zum Zuführen von gasförmigem Brennstoff, einem Oxidationsgaseinlass zum Zuführen von Oxidationsgas und einem Produktauslass zum Abführen von Reaktionsprodukten, eine mit dem Brennstoffeinlass verbundene Brennstoffzufuhrleitung und eine Gastankvorrichtung dem zweiten Aspekt der Erfindung, wobei die der zweite Anschluss der Absperreinrichtung mit der Brennstoffzufuhrleitung verbunden ist.

Eine der Erfindung zugrundeliegende Idee besteht darin, eine Absperreinrichtung zu realisieren, bei der ein Hauptventil und ein Servoventil jeweils räumlich getrennt voneinander angeordnet sind. Insbesondere ist eine Hauptventilnadel in einer ersten Kammer oder Hauptventilkammer angeordnet und mittels einer ersten Spule zwischen einer Öffnungs- und einer Schließstellung bewegbar, während eine Servoventilnadel in einer räumlich von der Hauptventilkammer angeordneten und mit dieser fluidisch leitend verbundenen zweiten Kammer oder Servoventilkammer angeordnet und mittels einer eigenen, zweiten Spule zwischen einer Öffnungs- und einer Schließstellung bewegbar ist. Hierbei ist die Hauptventilnadel in der ersten Kammer verschiebbar geführt und teilt diese in einen Steuerraum, der fluidisch leitend mit der zweiten Kammer verbunden ist, und einen Auslassraum, welcher eine mit einem Hochdruckanschluss oder ersten Anschluss verbundene erste Öffnung und eine mit einem Versorgungsanschluss oder zweiten Anschluss verbundene zweite Öffnung aufweist, welche in der Schließstellung der Hauptventilnadel durch diese abgedeckt bzw. verschlossen ist. Die zweite Kammer ist über eine Servoöffnung, welche durch die Servoventilnadel in deren Schließstellung abgedeckt bzw. verschlossen ist, ebenfalls mit dem Versorgungsanschluss fluidisch leitend verbunden.

Ein Vorteil der Erfindung liegt darin, dass Servoventil und Hauptventil bzw. deren Ventilnadeln in räumlich getrennten Kammern untergebracht sind und durch eigene Spulen bewegbar sind. Dies erleichtert eine bauraumoptimierte Anordnung von Servoventil und Hauptventil. Durch das Öffnen des Servoventils kann mit relativ geringer Öffnungskraft eine fluidisch leitende Verbindung zwischen dem zweiten Anschluss bzw. dem Versorgungsanschluss, der zur Verbindung mit einem Niederdruckreservoir wie der Brennstoffzufuhrleitung vorgesehen ist, und dem Steuerraum der Hauptventilkammer hergestellt werden. Da der Steuerraum über den Auslassraum fluidisch leitend mit dem ersten Anschluss bzw. dem Hochdruckanschluss, der zur Verbindung mit einem Hochdruckreservoir wie dem Gastank vorgesehen ist, fluidisch verbunden ist, erfolgt ein Druckausgleich zwischen dem zweiten Anschluss und dem Steuerraum. Hierbei wird einerseits der Druck im Steuerraum verringert und gleichzeitig steigt der Druck im zweiten Anschluss. Dadurch wird in der Schließstellung der Hauptventilnadel eine Kraft erzeugt, welche von dem Hauptventilsitz weg gerichtet ist und dadurch die Spule des Hauptventils beim Abheben der Hauptventilnadel vom Hauptventilsitz unterstützt. Dadurch kann die Spule des Hauptventils kleiner dimensioniert werden, was eine Miniaturisierung der Absperreinrichtung weiter erleichtert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die Hauptventilkammer und die Servoventilkammer in einem gemeinsamen Gehäuse ausgebildet sind. Durch die räumlich getrennte Anordnung der Haupt- und der Servoventilkammer in dem Gehäuse können die Ventilnadeln relativ zueinander beliebig orientiert sein, was eine bauraumoptimierte Anordnung bzw. Gestaltung weiter erleichtert.

Gemäß manchen Ausführungsformen kann vorgesehen sein, dass die erste Steueröffnung und die zweite Steueröffnung durch eine Verbindungsbohrung verbunden sind.

Gemäß manchen Ausführungsformen kann vorgesehen sein, dass die fluidisch leitende Verbindung zwischen dem Auslassraum und dem Steuerraum der Hauptventilkammer derart dimensioniert ist, dass sie bei geöffnetem Servoventil und geschlossenem Hauptventil als Drossel für eine Fluidströmung von dem Auslassraum in den Steuerraum wirkt. Dadurch wird der Druckausgleich zwischen Auslassraum und Steuerraum verlangsamt und dadurch die auf die Hauptventilnadel wirkende Öffnungskraft weiter vergrößert.

Gemäß manchen Ausführungsformen kann vorgesehen sein, dass der Auslassraum und der Steuerraum der Hauptventilkammer durch eine Bohrung in der Hauptventilnadel fluidisch leitend miteinander verbunden sind. Gemäß alternativen Ausführungsformen kann vorgesehen sein, dass der Auslassraum und der Steuerraum der Hauptventilkammer durch einen Spalt, der zwischen einem Außenumfang der Hauptventilnadel und einer die Hauptventilkammer umgrenzenden Wandung gebildet ist, fluidisch leitend miteinander verbunden sind. Die Weite des Spalts kann beispielsweise durch die zwischen der Wandung und der Hauptventilnadel vorgesehene Passung, z.B. eine Spielpassung, definiert sein. Der Spalt kann jedoch auch lediglich lokal ausgebildet sein, z.B. indem in der Wandung und/oder im Außenumfang der Ventilnadel eine Nut ausgebildet ist. Somit werden konstruktiv einfache und kostengünstig herstellbare Verbindungsleitungen zwischen Steuerraum und Auslassraum realisiert.

Gemäß manchen Ausführungsformen kann vorgesehen sein, dass das Hauptventil als stromlos geschlossenes Magnetventil ausgebildet ist und eine Feder aufweist, welche die Hauptventilnadel in die Schließstellung vorspannt.

Gemäß manchen Ausführungsformen kann vorgesehen sein, dass das Servoventil als stromlos geschlossenes Magnetventil ausgebildet ist und eine Feder aufweist, welche die Servoventilnadel in die Schließstellung vorspannt.

Gemäß manchen Ausführungsformen kann vorgesehen sein, dass die Absperreinrichtung in der Auslassöffnung des Hochdruckgastanks aufgenommen ist.

Im Folgenden wird die Erfindung unter Bezugnahme auf die Figuren der Zeichnungen erläutert. Von den Figuren zeigen:
- Fig. 1: eine schematische Darstellung eines hydraulischen Schaltbildes eines Brennstoffzellensystems gemäß einem Ausführungsbeispiel der Erfindung; und
- Fig. 2: eine schematische Schnittansicht einer Absperreinrichtung gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

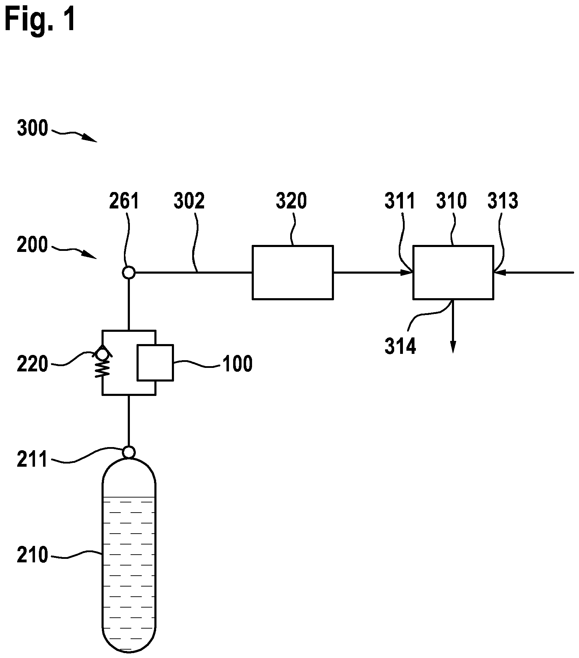

In Fig. 1 ist beispielhaft und schematisch ein Brennstoffzellensystem 300 dargestellt. Wie in Fig. 1 schematisch gezeigt, umfasst das Brennstoffzellensystem 300 eine Brennstoffzellenanordnung 310, eine Brennstoffzufuhrleitung 302, eine optionale Druckregelungsvorrichtung 320 und eine Gastankvorrichtung 200.

Die Brennstoffzellenanordnung 310 ist in Fig. 1 lediglich als Block dargestellt und weist zumindest eine Brennstoffzelle (nicht gezeigt), einen Brennstoffeinlass 311, einen Oxidationsgaseinlass 313 und einen Produktauslass 314 auf. Die Brennstoffzellenanordnung kann beispielsweise eine Vielzahl elektrisch in Reihe geschalteter Brennstoffzellen aufweisen, z.B. in Form eines sogenannten Stacks. Jede Brennstoffzelle weist eine Anode, eine Kathode und eine zwischen Anode und Kathode angeordnete Elektrolytschicht, z.B. in Form einer Membrane auf. Über den Brennstoffeinlass 311 kann der oder den Brennstoffzellen gasförmiger Brennstoff, z.B. Wasserstoff, an die Anoden zugeführt werden. In gleicher Weise kann über den Oxidationsgaseinlass 213 der oder den Brennstoffzellen Oxidationsgas, z.B. sauerstoffhaltige Umgebungsluft, an die Kathoden zugeführt werden kann. Über den Produktauslass 314 können die Reaktionsprodukte von der Kathode abgeführt werden. Die zumindest eine Brennstoffzelle ist somit dazu eingerichtet, die im Brennstoff gespeicherte chemische Energie zusammen mit Oxidationsgas direkt in elektrische Energie umzuwandeln.

Die Gastankvorrichtung 200 weist einen Hochdruckgastank 210 und eine Absperreinrichtung 100 auf. Der Hochdruckgastank 210, im Folgenden aus Gründen der Übersichtlichkeit auch lediglich als Tank bezeichnet, ist zur Aufnahme

von Gas, wie z.B. Wasserstoff ausgebildet und kann z.B. Gas bei einem Druck von bis zu 700 bar speichern. Wie in Fig. 1 schematisch dargestellt, kann der Tank 210 z.B. als im Wesentlichen zylindrischer Tank ausgebildet sein. Eine Auslassöffnung 211 des Tanks 210 kann z.B. an einem axialen Ende des Tanks 210 angeordnet sein. Die Absperreinrichtung 100 ist in Fig. 1 lediglich symbolisch dargestellt und wird nachfolgend noch im Detail erläutert. Wie in Fig. 1 schematisch gezeigt, ist die Absperreinrichtung 100 mit der Auslassöffnung 211 des Tanks 210 und einem Niederdruckanschluss 261 der Gastankvorrichtung 200 verbunden. Optional kann ein Rückschlagventil 220 parallel zu der Absperreinrichtung 100 geschalten sein, wie dies in Fig. 1 beispielhaft gezeigt ist. Die Brennstoffzufuhrleitung 302 verbindet den Niederdruckanschluss 261 der Gastankvorrichtung 200 mit dem Brennstoffeinlass 311 der Brennstoffzellenanordnung 310. Die optionale Druckregelvorrichtung 320 ist zwischen dem Niederdruckanschluss 261 und dem Brennstoffeinlass 311 in der Brennstoffzufuhrleitung 302 angeordnet und dazu eingerichtet, den Druck des aus dem Tank 210 ausströmenden Gases zu reduzieren und/oder die Durchflussmenge zu variieren. Beispielsweise kann die Druckregelvorrichtung 320 ein durchflussregelbares Drosselventil aufweisen.

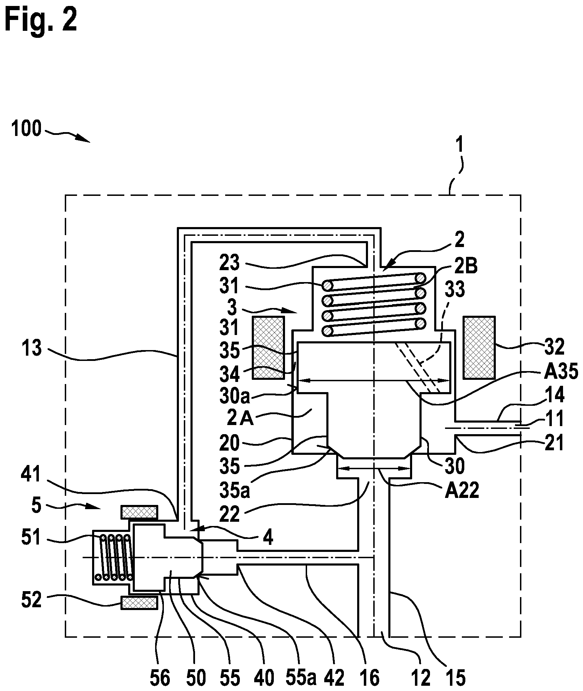

Fig. 2 zeigt schematisch und beispielhaft eine Absperreinrichtung 100, wie sie in der Gastankvorrichtung 200 in Fig. 1 eingebaut sein kann. Wie in Fig. 2 schematisch dargestellt, weist die Absperreinrichtung 100 einen ersten Anschluss 11, einen zweiten Anschluss 12, eine Hauptventilkammer 2, ein Hauptventil 3, eine Servoventilkammer 4 und ein Servoventil 5 auf.

Wie in Fig. 2 gezeigt, sind die Hauptventilkammer 2 und die Servoventilkammer 4 räumlich voneinander getrennt angeordnet. Allgemein definieren die Kammern 2, 4 jeweils einen Hohlraum, welcher z.B. durch Wandungen 20, 40 umgrenzt ist. Wie in Fig. 2 rein schematisch dargestellt, können die Hauptventilkammer 2 und die Servoventilkammer 4 einem gemeinsamen Gehäuse 1 ausgebildet sein.

Der erste Anschluss 11 ist zur Verbindung mit dem Hochdrucktank 210 vorgesehen und kann z.B. als eine Öffnung bzw. als ein Anschlussstutzen an dem Gehäuse 1 ausgebildet sein. Der zweite Anschluss 12 zur Verbindung mit der Versorgungsleitung bzw. der Brennstoffzufuhrleitung 302 vorgesehen und kann ebenfalls als eine Öffnung bzw. als ein Anschlussstutzen an dem Gehäuse 1 ausgebildet sein.

Die Hauptventilkammer 2 weist eine erste Öffnung 21, eine zweite Öffnung 22 und eine erste Steueröffnung 23 auf. Wie in Fig. 2 beispielhaft gezeigt, können die erste und die zweite Öffnung 21, 22 jeweils in einem ersten Endbereich der Hauptventilkammer 2 ausgebildet sein. Z.B. kann die erste Öffnung 21 an einer Umfangswandung und die zweite Öffnung 22 in einer sich quer zur Umfangswandung erstreckenden ersten Stirnwandung ausgebildet sein, wie dies in Fig. 2 beispielhaft gezeigt ist. Die erste Steueröffnung 23 kann insbesondere in einem zweiten Endbereich der Hauptventilkammer 2 ausgebildet sein, z.B. in einer der ersten Stirnwandung gegenüberliegenden zweiten Stirnwandung, wie in Fig. 2 gezeigt.

Die erste Öffnung 21 ist fluidisch leitend mit dem ersten Anschluss 11 verbunden, z.B. über eine Bohrung oder Leitung 14. Die zweite Öffnung 22 ist fluidisch leitend mit dem zweiten Anschluss 12 verbunden, z.B. über eine Bohrung oder Leitung 15, wie dies in Fig. 2 beispielhaft gezeigt ist.

Wie in Fig. 2 weiterhin gezeigt ist, weist die Servoventilkammer 4 eine zweite Steueröffnung 41 und eine Servoöffnung 42 auf. Die Servoöffnung 42 kann beispielsweise in einer Stirnwandung der Servoventilkammer 4 ausgebildet sein, und die zweite Steueröffnung 41 kann beispielsweise in einer sich quer zur Stirnwandung erstreckenden Umfangswandung 40 ausgebildet sein, wie dies in Fig. 2 beispielhaft gezeigt ist.

Die erste Steueröffnung 23 der Hauptventilkammer 2 und die zweite Steueröffnung der Servoventilkammer 4 sind fluidisch leitend miteinander verbunden, z.B. über eine Bohrung oder Leitung 13, wie dies in Fig. 2 schematisch gezeigt ist. Die Servoöffnung 42 ist fluidisch leitend mit dem zweiten Anschluss 12 verbunden, z.B. über eine Bohrung oder Leitung 16.

Das Hauptventil 3 ist als stromlos geschlossenes Magnetventil 3 ausgeführt und weist ein Hauptventilnadel 30, eine Feder 31 und eine Spule 32 auf. Die Hauptventilnadel 30 ist in der Hauptventilkammer 2 angeordnet und an ihrem Außenumfang 30a durch die Wandung 20, insbesondere die Umfangswandung, axial verschiebbar geführt. Wie in Fig. 2 schematisch dargestellt, kann die Hauptventilnadel 30 beispielsweise einen säulen- oder zylinderförmigen Hauptabschnitt 35 und einen Führungsabschnitt 36 aufweisen, welcher an einem ersten axialen Ende des Hauptabschnitts 35 radial von diesem vorsteht. Ein zweites axiales

Ende des Hauptabschnitts 35 weist eine Dichtfläche 35a auf, welche z.B. konisch gestaltet sein kann. Der Führungsabschnitt 36 kann z.B. eine zylinderförmige Außenumfangsfläche aufweisen, welche an der Wandung 20 geführt ist.

Wie in Fig. 2 schematisch dargestellt, unterteilt die Hauptventilnadel 30 die Hauptventilkammer 2 in einen Auslassraum 2A und einen Steuerraum 2B. Beispielsweise kann der Führungsabschnitt 36 eine Trennwand bilden, wie in Fig. 2 schematisch gezeigt. Die die erste und die zweite Öffnung 21, 22 münden jeweils in den Auslassraum 2A. Die erste Steueröffnung 23 mündet in den Steuerraum 2B. Der Steuerraum 2B und der Auslassraum 2A sind fluidisch leitend verbunden, z.B. durch eine in der Hauptventilnadel 30, insbesondere dem Führungsabschnitt 36 ausgebildete Bohrung 33, oder durch einen Spalt 34, der zwischen dem Außenumfang 30a der Hauptventilnadel 30, insbesondere dem Außenumfang des Führungsabschnitts 36, und der Wandung 20 gebildet ist.

Der Spalt 34 ist in Fig. 2 aus Gründen der Deutlichkeit vergrößert dargestellt. Beispielsweise kann eine Weite des Spalts 34 durch die Passung zwischen Ventilnadel 30 und dem durch die Umfangswandung 20 definierten Bohrungsdurchmesser gegeben sein.

Die Hauptventilnadel 30 ist mittels der Spule 32, welche die Hauptventilnadel 30 umschließend angeordnet ist, z.B. außerhalb der Hauptventilkammer 2, zwischen einer Schließstellung und einer Öffnungsstellung bewegbar. Die Feder 31 spannt die Hauptventilnadel 30 in die Schließstellung vor und kann z.B. in dem Steuerraum 2B angeordnet sein, wie dies in Fig. 2 schematisch gezeigt ist. Fig. 2 zeigt die Schließstellung der Hauptventilnadel 30. In der Schließstellung liegt die Hauptventilnadel 30, insbesondere deren Dichtfläche 35a, an einem die zweite Öffnung 22 umgebenden Hauptventilsitz an, um die zweite Öffnung 22 gegenüber der ersten Öffnung 21 abzudichten. In der Öffnungsstellung ist die Hauptventilnadle 30, insbesondere deren Dichtfläche 35a, von dem Hauptventilsitz abgehoben, so dass Fluid von dem ersten Anschluss 11 in den Auslassraum 2A und durch die zweite Öffnung 22 zum zweiten Anschluss 12 strömen kann.

Das Servoventil 5 ist ebenfalls als stromlos geschlossenes Magnetventil ausgeführt und weist ein Servoventilnadel 50, eine Feder 51 und eine Spule 352 auf. Die Servoventilnadel 50 ist in der Servoventilkammer 4 angeordnet und an ihrem Außenumfang durch die Wandung 40, insbesondere die Umfangswandung, axial

verschiebbar geführt. Wie in Fig. 2 schematisch dargestellt, kann die Servoventilnadel 50 beispielsweise einen säulen- oder zylinderförmigen Hauptabschnitt 55 und einen Führungsabschnitt 56 aufweisen, welcher an einem ersten axialen Ende des Hauptabschnitts 55 radial von diesem vorsteht. Ein zweites axiales Ende des Hauptabschnitts 55 weist eine Dichtfläche 55a auf, welche z.B. konisch gestaltet sein kann. Der Führungsabschnitt 56 kann z.B. eine zylinderförmige Außenumfangsfläche aufweisen, welche an der Wandung 40 geführt ist.

Die Servoventilnadel 50 ist mittels der Spule 52, welche die Servoventilnadel 50 umschließend angeordnet ist, z.B. außerhalb der Servoventilkammer 4, zwischen einer Schließstellung und einer Öffnungsstellung bewegbar. Die Feder 51 spannt die Servoventilnadel 50 in die Schließstellung vor und kann z.B. der Servoventilkammer 4 angeordnet sein, wie dies in Fig. 2 schematisch gezeigt ist. Fig. 2 zeigt die Schließstellung der Servoventilnadel 50.

In der Schließstellung liegt die Servoventilnadel 50, insbesondere deren Dichtfläche 55a, an einem die Servoöffnung 42 umgebenden Servoventilsitz an, um die Servoöffnung 42 gegenüber der zweiten Steueröffnung 41 abzudichten. In der Öffnungsstellung ist die Servoventilnadel 50, insbesondere deren Dichtfläche 55a, von dem Servoventilsitz abgehoben, so dass über die zweite Steueröffnung 41 und die Servoöffnung 42 ein Fluidaustausch durch die Servoventilkammer 4 hindurch stattfinden kann.

In der in Fig. 2 gezeigten Situation, in der sowohl das Hauptventil 3 als auch das Servoventil 5 geschlossen sind, liegt im Auslassraum 2A, im Steuerraum 2B und in der Servoventilkammer 4 jeweils der am ersten Anschluss 11 anliegende Druck vor. Die Hauptventilnadel 3 weist in einem dem Steuerraum 2B zugewandten ersten Endbereich eine erste Querschnittsfläche A35 auf. Eine zweite Querschnittsfläche A22 ist durch eine Fläche definiert, die durch den Hauptventilsitz umgrenzt wird. Wie in Fig. 2 schematisch dargestellt, ist die erste Querschnittsfläche A35 größer als die zweite Querschnittsfläche A22. Wenn der Druck am ersten Anschluss 11 größer als der Druck am zweiten Anschluss 12 ist, wirkt somit neben der von der Feder 31 auf die Hauptventilnadel 30 aufgebrachte Kraft zusätzlich eine Druckkraft, welche die Hauptventilnadel 30 in ihre Schließstellung drängt.

Um das Hauptventil 3 zu öffnen, wird zunächst das Servoventil 5 geöffnet, das heißt, die Spule 52 des Servoventil 5 wird bestromt, um die Servoventilnadel 50 vom Servoventilsitz abzuheben. Der Steuerraum 2B wird somit über die erste und die zweite Steueröffnung 23, 42 sowie die Servoöffnung 42 fluidisch leitend mit dem Druckniveau des zweiten Anschlusses 12 verbunden, was typischerweise zu einer Druckabsenkung im Steuerraum 2B führt. Allgemein findet ein Druckausgleich zwischen dem Steuerraum 2B und dem zweiten Anschluss 12 statt, weshalb es auch zu einem Druckausgleich zwischen der ersten Steueröffnung 23 und der zweiten Öffnung 22 kommt. Somit wird die infolge der unterschiedlichen Querschnittsflächen A35, A22 wirkende Druckkraft infolge des Druckausgleichs zunehmend reduziert. Dadurch wird die durch Bestromung der Spule 32 zu erzeugende magnetische Kraft zum Bewegen der Hauptventilnadel 35 in die Öffnungsstellung verringert. Die fluidisch leitende Verbindung zwischen dem Auslassraum 2A und dem Steuerraum 2B der Hauptventilkammer 2, also z.B. der Spalt 34 oder die Bohrung 33, kann insbesondere derart dimensioniert sein, dass sie bei geöffnetem Servoventil 5 und geschlossenem Hauptventil 3 als

Drossel für eine Fluidströmung von dem Auslassraum 2A in den Steuerraum 2B wirkt. Dies verringert die durch Bestromung der Spule 32 zu erzeugende magnetische Kraft zum Bewegen der Hauptventilnadel 35 in die Öffnungsstellung weiter.

Durch die räumlich getrennte Anordnung der Hauptventilkammer 2 und der Servoventilkammer 4 können Haupt- und Servoventil 3, 5 bauraumoptimiert untergebracht werden. Insbesondere können die Hauptventilnadel 30 und die Servoventilnadel 50 sich in beliebiger Weise relativ zueinander erstrecken, was die Flexibilität der Anordnung erheblich vergrößert.

Obwohl die vorliegende Erfindung vorstehend anhand von Ausführungsbeispielen exemplarisch erläutert wurde, ist sie darauf nicht beschränkt, sondern auf vielfältige Weise modifizierbar, ohne vom Umfang der Ansprüche abzuweichen. Insbesondere sind auch Kombinationen der voranstehenden Ausführungsbeispiele denkbar. Beispielsweise wurde die Absperreinrichtung 100 in Zusammenhang mit einer Gastankvorrichtung 200 für ein Brennstoffzellensystem 300 beschrieben, ist jedoch nicht hierauf beschränkt. Grundsätzlich kann die Absperreinrichtung 100 in beliebigen Gasleitungssystemen eingesetzt werden.

## Patentansprüche

1. Absperreinrichtung (100) für eine Gastankvorrichtung (200), aufweisend einen ersten Anschluss (11) zur Verbindung mit einem Hochdrucktank (210) und einen zweiten Anschluss (12) zur Verbindung mit einer Versorgungsleitung (302), wobei eine Hauptventilkammer (2), welche eine mit dem ersten Anschluss (11) fluidisch leitend verbundene erste Öffnung (21)und eine mit dem zweiten Anschluss (12) fluidisch leitend verbundene zweite Öffnung (22), und eine erste Steueröffnung (23) aufweist,
und wobei ein als schaltbares Magnetventil ausgebildetes Hauptventil (3) mit einer in der Hauptventilkammer (2) angeordneten Hauptventilnadel (30), welche zwischen einer Schließstellung, in der sie an einem die zweite Öffnung (22) umgebenden Hauptventilsitz anliegt, um die zweite Öffnung (22) gegenüber der ersten Öffnung (21) abzudichten, und einer Öffnungsstellung bewegbar ist, in der sie von dem Hauptventilsitz abgehoben ist, wobei die Hauptventilnadel (30) die Hauptventilkammer (2) in einen Auslassraum (2A), in welchen die erste und die zweite Öffnung (21, 22) münden, und einen Steuerraum (2B) teilt, in welchen die erste Steueröffnung (23) mündet und welcher mit dem Auslassraum (2A) fluidisch leitend verbundenist, wobei die Absperrvorrichtung (100) eine von der Hauptventilkammer (2) räumlich getrennte Servoventilkammer (4) aufweist, welche eine fluidisch leitend mit der ersten Steueröffnung (23) verbundene zweite Steueröffnung (41) und eine mit dem zweiten Anschluss (12) fluidisch leitend verbundene Servoöffnung (42) aufweist,
**dadurch gekennzeichnet, dass**
die Absperrvorrichtung (100) ein als schaltbares Magnetventil ausgebildetes Servoventil (5) aufweist, mit einer in der Servoventilkammer (5) angeordneten Servoventilnadel (50), welche zwischen einer Schließstellung, in der sie an einem die Servoöffnung (42) umgebenden Servoventilsitz anliegt, um die Servoöffnung (42) gegenüber der zweiten Steueröffnung (41) abzudichten, und einer Öffnungsstellung bewegbar ist, in der sie von dem Servoventilsitz abgehoben ist.

2. Absperreinrichtung (100) nach Anspruch 1, wobei die Hauptventilkammer (2) und die Servoventilkammer (4) in einem gemeinsamen Gehäuse (1) ausgebildet sind.

3. Absperreinrichtung (100) nach Anspruch 2, wobei die erste Steueröffnung (23) und die zweite Steueröffnung (41) durch eine Verbindungsbohrung (13) verbunden sind.

4. Absperreinrichtung (100) nach einem der voranstehenden Ansprüche, wobei die fluidisch leitende Verbindung zwischen dem Auslassraum (2A) und dem Steuerraum (2B) der Hauptventilkammer (2) derart dimensioniert ist, dass sie bei geöffnetem Servoventil (5) und geschlossenem Hauptventil (3) als Drossel für eine Fluidströmung von dem Auslassraum (2A) in den Steuerraum (2B) wirkt.

5. Absperreinrichtung (100) nach einem der voranstehenden Ansprüche, wobei der Auslassraum (2A) und der Steuerraum (2B) der Hauptventilkammer (2) durch eine Bohrung (33) in der Hauptventilnadel (30) oder durch einen Spalt (34), der zwischen einem Außenumfang (30a) der Hauptventilnadel (30) und einer die Hauptventilkammer (2) umgrenzenden Wandung (20) gebildet ist, fluidisch leitend miteinander verbunden sind.

6. Absperreinrichtung (100) nach einem der voranstehenden Ansprüche, wobei das Hauptventil (3) als stromlos geschlossenes Magnetventil ausgebildet ist und eine Feder (31) aufweist, welche die Hauptventilnadel (30) in die Schließstellung vorspannt.

7. Absperreinrichtung (100) nach einem der voranstehenden Ansprüche, wobei das Servoventil (5) als stromlos geschlossenes Magnetventil ausgebildet ist und eine Feder (51) aufweist, welche die Servoventilnadel (50) in die Schließstellung vorspannt.

8. Gastankvorrichtung (200), insbesondere für ein Brennstoffzellensystem (300), aufweisend:
einen Hochdruckgastank (210) zur Aufnahme von Gas; und
eine Absperreinrichtung (100) nach einem der voranstehenden Ansprüche;
wobei der erste Anschluss (11) der Absperreinrichtung (100) mit einer Auslassöffnung (211) des Hochdruckgastanks (210) verbunden ist.

9. Gastankvorrichtung (200) nach Anspruch 8, wobei die Absperreinrichtung (100) in der Auslassöffnung (211) des Hochdruckgastanks (210) aufgenommen ist.

10. Brennstoffzellensystem (300), aufweisend:
eine Brennstoffzellenanordnung (310) mit zumindest einer Brennstoffzelle, einem Brennstoffeinlass (311) zum Zuführen von gasförmigem Brennstoff, einem Oxidationsgaseinlass (313) zum Zuführen von Oxidationsgas und einem Produktauslass (314) zum Abführen von Reaktionsprodukten;
eine mit dem Brennstoffeinlass (311) verbundene Brennstoffzufuhrleitung (302); und
eine Gastankvorrichtung (200) nach Anspruch 8 oder 9;
wobei die der zweite Anschluss (12) der Absperreinrichtung (100) mit der Brennstoffzufuhrleitung (302) verbunden ist.

## Claims

1. Shut-off device (100) for a gas tank apparatus (200), comprising a first connector (11) for connection to a high-pressure tank (210) and a second connector (12) for connection to a supply line (302), a main valve chamber (2), which has a first opening (21) connected to the first connector (11) in a fluidically conductive manner, a second opening (22) connected to the second connector (12) in a fluidically conductive manner, and a first control opening (23),
and a main valve (3), which is designed as a switchable solenoid valve and has a main valve needle (30) arranged in the main valve chamber (2), which can be moved between a closed position, in which it bears against a main valve seat surrounding the second opening (22) in order to seal the second opening (22) with respect to the first opening (21), and an open position, in which it is lifted from the main valve seat, wherein the main valve needle (30) divides the main valve chamber (2) into an outlet chamber (2A), into which the first and the second opening (21, 22) open, and a control chamber (2B), into which the first control opening (23) opens and which is connected to the outlet chamber (2A) in a fluidically conductive manner, wherein the shut-off device (100) has a servo valve chamber (4) spatially separated from the main valve chamber (2), which comprises a second control opening (41) connected to the first control opening (23) in a fluidically conductive manner and a servo opening (42) connected to the second connector (12) in a fluidically conductive manner,
**characterized in that** the shut-off device (100) has a servo valve (5), which is designed as a switchable solenoid valve, having a servo valve needle (50) arranged in the servo valve chamber (5), which can be moved between a closed position, in which it bears against a servo valve seat surrounding the servo opening (42) in order to seal the servo opening (42) with respect to the second control opening (41), and an open position, in which it is lifted from the servo valve seat.

2. Shut-off device (100) according to Claim 1, wherein the main valve chamber (2) and the servo valve chamber (4) are formed in a common housing (1).

3. Shut-off device (100) according to Claim 2, wherein the first control opening (23) and the second control opening (41) are connected by a connecting bore (13).

4. Shut-off device (100) according to one of the preceding claims, wherein the fluidically conductive connection between the outlet chamber (2A) and the control chamber (2B) of the main valve chamber (2) is dimensioned such that it acts as a restrictor for a fluid flow from the outlet chamber (2A) into the control chamber (2B) with the servo valve (5) open and the main valve (3) closed.

5. Shut-off device (100) according to one of the preceding claims, wherein the outlet chamber (2A) and the control chamber (2B) of the main valve chamber (2) are connected to each other in a fluidically conductive manner by a hole (33) in the main valve needle (30) or by a gap (34), which is formed between an outer circumference (30a) of the main valve needle (30) and a wall (20) surrounding the main valve chamber (2).

6. Shut-off device (100) according to one of the preceding claims, wherein the main valve (3) is formed as a normally closed solenoid valve and has a spring (31) which preloads the main valve needle (30) into the closed position.

7. Shut-off device (100) according to one of the preceding claims, wherein the servo valve (5) is formed as a normally closed solenoid valve and has a spring (51) which preloads the servo valve needle (50) into the closed position.

8. Gas tank apparatus (200), in particular for a fuel cell system (300), having:
a high-pressure gas tank (210) for holding gas; and
a shut-off device (100) according to one of the preceding claims;
wherein the first connector (11) of the shut-off device (100) is connected to an outlet opening (211) of the high-pressure gas tank (210).

9. Gas tank apparatus (200) according to Claim 8, wherein the shut-off device (100) is accommodated in the outlet opening (211) of the high-pressure gas tank (210).

10. Fuel cell system (300), having:
a fuel cell assembly (310) comprising at least one fuel cell, a fuel inlet (311) for supplying gaseous fuel, an oxidation gas inlet (313) for supplying oxidation gas, and a product outlet (314) for discharging reaction products;
a fuel supply line (302) connected to the fuel inlet (311); and
a gas tank apparatus (200) according to Claim 8 or 9;
wherein the second connector (12) of the shut-off device (100) is connected to the fuel supply line (302).

## Revendications

1. Dispositif d'arrêt (100) pour un dispositif de réservoir à gaz (200), possédant un premier raccord (11) destiné à la liaison avec un réservoir haute pression (210) et un deuxième raccord (12) destiné à la liaison avec une conduite d'alimentation (302), une chambre de vanne principale (2), laquelle possède une première ouverture (21) reliée en conduction fluidique au premier raccord (11), une deuxième ouverture (22) reliée de manière fluidique au deuxième raccord (12), et une première ouverture de commande (23),
et une vanne principale (3), réalisée sous la forme d'une électrovanne commutable, qui comprend un pointeau de vanne principale (30) disposée dans la chambre de vanne principale (2), lequel est mobile entre une position de fermeture, dans laquelle il repose contre un siège de vanne principale entourant la deuxième ouverture (22) afin de rendre la deuxième ouverture (22) étanche par rapport à la première ouverture (21), et une position d'ouverture, dans laquelle il est soulevé du siège de vanne principale, le pointeau de vanne principale (30) divisant la chambre de vanne principale (2) en un espace de sortie (2A), dans lequel débouchent la première et la deuxième ouverture (21, 22), et une chambre de commande (2B), dans laquelle débouche la première ouverture de commande (23) et laquelle est reliée en conduction fluidique à la chambre de sortie (2A), le dispositif d'arrêt (100) possédant une chambre de servovanne (4) séparée spatialement de la chambre de vanne principale (2), laquelle possède une deuxième ouverture de commande (41) reliée en conduction fluidique à la première ouverture de commande (23) et une ouverture de servovanne (42) reliée en conduction fluidique au deuxième raccord (12),
**caractérisé en ce que** le dispositif d'arrêt (100) possède une servovanne (5) réalisée sous la forme d'une électrovanne commutable, comprenant un pointeau de servovanne (50) disposé dans la chambre de servovanne (5), lequel peut être déplacé entre une position de fermeture, dans laquelle il repose contre un siège de servovanne entourant l'ouverture de servovanne (42), afin de rendre l'ouverture de servovanne (42) étanche par rapport à la deuxième ouverture de commande (41), et une position d'ouverture, dans laquelle il est soulevé du siège de servovanne.

2. Dispositif d'arrêt (100) selon la revendication 1, la chambre de vanne principale (2) et la chambre de servovanne (4) étant formées dans un boîtier commun (1).

3. Dispositif d'arrêt (100) selon la revendication 2, le premier orifice de commande (23) et le deuxième orifice de commande (41) étant reliés par un alésage de liaison (13).

4. Dispositif d'arrêt (100) selon l'une des revendications précédentes, la liaison à conduction fluidique entre la chambre de sortie (2A) et la chambre de commande (2B) de la chambre de vanne principale (2) étant dimensionnée de telle sorte que, lorsque la servovanne (5) est ouverte et la vanne principale (3) est fermée, elle agit comme un étranglement pour un écoulement de fluide de la chambre de sortie (2A) dans la chambre de commande (2B).

5. Dispositif d'arrêt (100) selon l'une des revendications précédentes, l'espace de sortie (2A) et l'espace de commande (2B) de la chambre de vanne principale (2) étant reliés l'un à l'autre en conduction fluidique par un alésage (33) dans le pointeau de vanne principale (30) ou par une fente (34) qui est formée entre une périphérie extérieure (30a) du pointeau de vanne principale (30) et une paroi (20) délimitant la chambre de vanne principale (2).

6. Dispositif d'arrêt (100) selon l'une des revendications précédentes, la vanne principale (3) étant réalisée sous la forme d'une électrovanne fermée au repos et possédant un ressort (31) qui précontraint le pointeau de vanne principale (30) dans la position de fermeture.

7. Dispositif d'arrêt (100) selon l'une des revendications précédentes, la servovanne (5) étant réalisée sous la forme d'une électrovanne fermée au repos et possédant un ressort (51) qui précontraint le pointeau de servovanne (50) dans la position de fermeture.

8. Arrangement de réservoir à gaz (200), notamment pour un système de piles à combustible (300), possédant :
un réservoir à gaz haute pression (210) destiné à accueillir du gaz ; et
un dispositif d'arrêt (100) selon l'une des revendications précédentes ;
le premier raccord (11) du dispositif d'arrêt (100) étant relié à un orifice de sortie (211) du réservoir à gaz haute pression (210).

9. Arrangement de réservoir à gaz (200) selon la revendication 8, le dispositif d'arrêt (100) étant logé dans l'ouverture de sortie (211) du réservoir à gaz haute pression (210).

10. Système de pile à combustible (300), possédant :
un ensemble de piles à combustible (310) comprenant au moins une pile à combustible, une entrée de combustible (311) destinée à l'amenée de combustible gazeux, une entrée de gaz oxydant (313) destinée à l'amenée de gaz oxydant et une sortie de produit (314) destinée à l'évacuation des produits de réaction ;
une conduite d'amenée de combustible (302) reliée à l'entrée de combustible (311) ; et
un arrangement de réservoir à gaz (200) selon la revendication 8 ou 9 ;
le deuxième raccord (12) du dispositif d'arrêt (100) étant relié à la conduite d'amenée de combustible (302).
